# EUROPEAN PATENT APPLICATION

(11) **EP 4 480 728 A1**
(43) Date of publication of application: **25.12.2024**
(21) Application number: 23181184.5
(22) Date of filing: 23.06.2023
(51) Int. Cl.: B60K 15/03, B60K 15/073

(54) **ENERGY ABSORBING SYSTEM FOR VEHICLE FUEL GAS STORAGE SYSTEMS AND RELATED ASPECTS**

(71) Applicant: VOLVO TRUCK CORPORATION, 405 08 Göteborg (SE)
(72) Inventor: MITTAL, Tanmay, 560066 Bangalore (IN)
(74) Representative: Zacco Sweden AB

(57) **Abstract**

An energy absorbing system for a vehicle fuel gas, for example hydrogen or liquefied natural gas, LNG, storage system comprises a gas fuel storage tank configured to provide fuel for a vehicle, a fuel tank protection frame enclosing the gas fuel storage tank, the frame configured to attach directly or indirectly to the vehicle, and one or more energy absorbers located on either side of the fuel tank protection frame, each energy absorber being configured to deploy to absorb energy responsive to lateral impact force(s) applied to the vehicle and/or to the fuel tank protection frame.

## Description

The disclosure relates generally an energy absorbing system for vehicle fuel comprising a gas, for example, a hydrogen storage systems, HSS, or liquefied natural gas storage system, or other type of gas fuel, which may be stored in a compressed, possibly liquefied form for transportation. In particular but not exclusively to an energy absorbing system for a vehicle gas fuel which is located behind a driver's cab of a heavy duty vehicle. In particular aspects, the disclosure relates to an energy absorbing system for a heavy-duty vehicle's fuel gas storage systems, referred to herein as a GSS, which may comprise in some embodiments a HSS, and related aspects. The disclosure can be applied to heavy-duty vehicles, such as trucks, buses, and construction equipment, among other vehicle types. Although the disclosure may be described with respect to a particular vehicle, the disclosure is not restricted to any particular vehicle. Such GGSs may be protected from the rear by a vehicle accessory attached to the heavy-duty vehicle, and from the front by the drivers cab, but are vulnerable on either side of the vehicle to lateral forces from impacts and collisions, especially if the vehicle rolls over onto its side.

### BACKGROUND

Gas fuel storage systems for heavy-duty vehicles are known, however, protecting such systems in the event of a vehicle collision can be challenging due to the weight of the gas storage system (GSS). Fuel cell electric vehicles, FCEV, which are heavy-duty vehicles, may need to store a large amount of gas fuel and this can result in the gas storage system (GSS) tank(s) and protective frame may weighing up to around 3000kg. Currently, truck manufacturers rely on protective frame structures around the GSS to absorb impact energy. Tanks and electrical components are so placed such that impact energy first transferred to the structure and then to the tanks. However, existing protection systems for vehicle fuel GSSs, and particularly for vehicle fuel HSSs, may not be sufficient to absorb all of the energy which may be transferred via the tank to the gas inside causing it to expand if the vehicle is in a collision or experiences an impact.

### SUMMARY

The following statements are examples of the disclosed technology and the invention is defined by the accompanying claims.

According to a first aspect of the disclosure, an energy absorbing system for vehicle fuel gas, for example, hydrogen, storage systems, the energy absorbing system comprises: a gas fuel storage tank configured to provide fuel for a vehicle; a fuel tank protection frame enclosing the gas fuel storage tank, the frame configured to attach directly or indirectly to the vehicle; one or more energy absorbers located on either side of the fuel tank protection frame, each energy absorber being configured to deploy to absorb energy responsive to lateral impact force(s) applied to the vehicle and/or to the fuel tank protection frame.

FCEVs which are heavy duty vehicles may have GSSs, in particular HSSs, which comprise gas storage tanks and steel structure fuel tank protection frames which weigh almost 3000 kg. In event of Vehicle Rollover or Side Rail Impact, a large amount of energy is transferred to this area which may cause damage to the gas fuel tanks that can more easily result in an explosion or fire hazard than in the case of a tank storing oil or a similar liquid fuel as gas is more capable of absorbing energy and expanding as a result than a liquid is. This is particularly relevant for gas fuel which may be compressed in a fuel tank and stored as a liquid which may absorb energy and revert back to a gas form, exploding the fuel tank, if sufficient energy is absorbed. Hydrogen gas is particularly volatile and if compressed, is capable of a large amount of expansion even if only a relatively small amount of energy is transferred compared to the amount of expansion by LNG.

Other technical advantages of the energy absorbing system of the first aspect or any of its embodiments disclosed herein are that by mounting the energy absorbers on the fuel tank protection frame more energy can be absorbed during such collision event before any is transferred to fuel tank itself. First the energy absorbers will absorb energy and after this the GSS frame will absorb some energy both of which reduce the remaining energy transfer from the frame to the enclosed fuel tanks. This may help better protect the fuel tanks from absorbing energy in the case of a vehicle collision and/or vehicle rollover as the energy absorbers can be positioned on the protective frame around the gas fuel tank so that the energy absorbers come into contact first with the ground before the GSS frame which reduces the likelihood of sufficient energy being transferred via the GSS frame to the gas fuel tank to cause an explosion. It is particularly important to prevent a leak occurring in a gas fuel tank carrying hydrogen fuel as this could be particularly explosive.

Optionally, in some example embodiments, including in at least one preferred example embodiment, the fuel tank protection frame is located to the rear of a driver's cab of the vehicle, wherein the frame extends laterally across from one side of the vehicle to the other side of the vehicle.

Optionally, in some embodiments, the fuel tank is located behind a driver cab of a heavy-duty vehicle such as a truck or the like, to which a vehicle accessory such as a trailer or the like may be attached.

By locating the one or more energy absorbers between the driver cab of the heavy-duty vehicle and the vehicle accessory attached to the heavy-duty vehicle, the fuel tank may be protected from front and rear impact forces and the one or more energy absorbers located on opposing sides of the vehicle can be arranged to protect the gas fuel tank from lateral forces. The term lateral force refers to any force or torque which has a component in the direction across the vehicle in other words from side to side of the vehicle.

Optionally, in some example embodiments, including in at least one preferred example embodiment, at least one energy absorber of the one or more energy absorbers comprises a crush can or similar object designed to be crushed or deformed easily so as to absorb energy when it is subject to a force.

Optionally in some example embodiments, including in at least one preferred example embodiment, each energy absorber of the one or more energy absorbers is located on a side of the fuel tank protection frame is configured to absorb energy responsive to lateral impact force(s) generated by a collision of the vehicle or fuel tank protection frame with another object on the side where that energy absorber is located.

Optionally, in some example embodiments, including in at least one preferred example embodiment, at least one energy absorber of the one or more energy absorbers comprises a deployable energy absorber, such as an airbag, which is configured to deploy after a deployment triggering event, wherein the deployed energy absorber is configured to absorb energy from the lateral impact force(s).

Optionally in some example embodiments, including in at least one preferred example embodiment, the lateral impact force(s) include forces generated as a result of the vehicle rolling over or otherwise rotating onto a side of the fuel tank protection frame.

Optionally in some example embodiments, including in at least one preferred example embodiment each one of the energy absorbers of the one or more energy absorbers located on a side of the fuel tank protection frame comprises an air-bag configured to absorb energy when the vehicle has a side-ways impact such as with a side rail or is subject to lateral roll-over forces of sufficient magnitude to cause the vehicle to topple over on its side.

Optionally in some example embodiments, including in at least one preferred example embodiment, a pair of air-bags are provided deployable on each side of the fuel tank protection frame.

Optionally in some example embodiments, including in at least one preferred example embodiment each one of the energy absorbers of the one or more energy absorbers located on a side of the fuel tank protection frame comprises a crush can configured to absorb energy when the vehicle has a side-ways impact such as with a side rail or is subject to lateral roll-over forces of sufficient magnitude to cause the vehicle to topple over on its side.

Optionally in some example embodiments, including in at least one preferred example embodiment, a pair of crush cans are provided deployable on each side of the fuel tank protection frame.

Optionally, in some example embodiments, including in at least one preferred example embodiment, the energy absorbers comprises both an air bag and a crush can located on each side of the protective frame of a GSS, wherein both of the energy absorbers are configured to absorb energy from the lateral impact force(s) and/or from vehicle roll over.

Optionally in some example embodiments, including in at least one preferred example embodiment, the fuel tank protection frame includes two hydrogen fuel tanks, and a pair of air-bags are provided to protect each end of the fuel tanks which are attached and are deployable on each side of the frame protecting the ends of the fuel tanks.

Additional energy absorbers maybe attached to other points on the frame, for example, to the vehicle front facing and vehicle rear facing side(s) of the frame, and/or to the top and/or bottom of the frame if there is a gap between the frame bottom and the vehicle chassis onto which the frame is mounted.

According to another, second, aspect of the disclosure, an energy absorber device is provided which is configured for use in an energy absorbing system for vehicle fuel gas, for example, a hydrogen or a ]LNG, storage system according to the first aspects or any of its disclosed embodiments.

Optionally in some example embodiments, including in at least one preferred example embodiment, the energy absorber comprises an air-bag.

Optionally in some example embodiments, including in at least one preferred example embodiment, the energy absorber comprises a crush can..

According to another, third, aspect of the disclosure, a vehicle comprises the energy absorbing system of the first aspect or any one of its disclosed embodiments.

Optionally in some example embodiments, including in at least one preferred example embodiment, the vehicle is a heavy vehicle.

Optionally in some example embodiments, including in at least one preferred example embodiment, the vehicle is a heavy vehicle and the fuel tank protection frame is located between the cab and a vehicle accessory attached to the heavy vehicle.

Optionally in some example embodiments, including in at least one preferred example embodiment, the vehicle accessory is a trailer.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Some examples of the disclosed technology are described in more detail below with reference to the appended drawings which are by way of example only and in which:
FIG. 1 shows schematically a side-view of a heavy-duty vehicle having a hydrogen storage system mounted to the rear of the vehicle cab;
FIGs. 2A and 2B show schematically in more detail respectively a side view and a frontal view (from the vehicle cab for example) of the HSS of FIG. 1;
FIGs. 3A and 3B show schematically an energy absorbing system for the hydrogen storage system of FIGs. 1, 2A and 2B according to an example embodiment of the disclosed technology;
FIGs. 4A and 4B show schematically an energy absorbing system for the vehicle hydrogen storage system of FIGs. 1, 2A and 2B according to another example embodiment of the disclosed technology;
FIGs. 5A, 5B, and 5C show schematically progressive deployment of energy absorbers on one side as a result of a vehicle roll-over according to an example embodiment of the disclosed technology where the energy absorbers comprise air bags; and
FIGs. 6A, 6B, and 6C show schematically progressive deployment of energy absorbers on one side as a result of a vehicle roll-over according to another example embodiment of the disclosed technology where the energy absorbers comprise crush cans.

### DETAILED DESCRIPTION

The detailed description set forth below provides information and examples of the disclosed technology with sufficient detail to enable those skilled in the art to practice the disclosure.

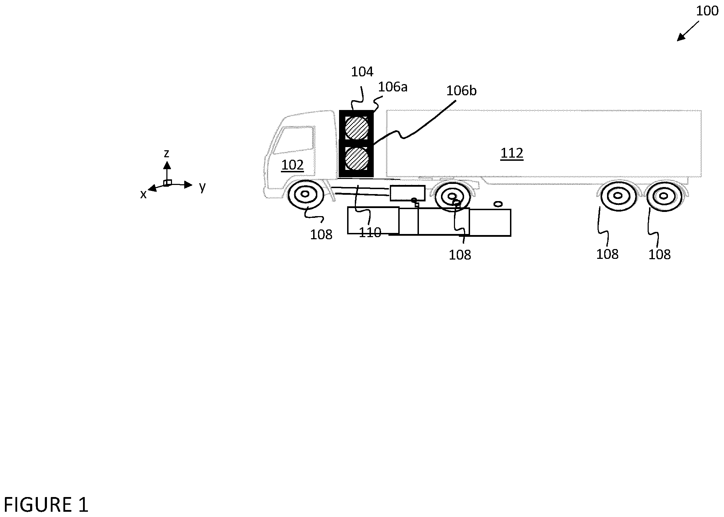

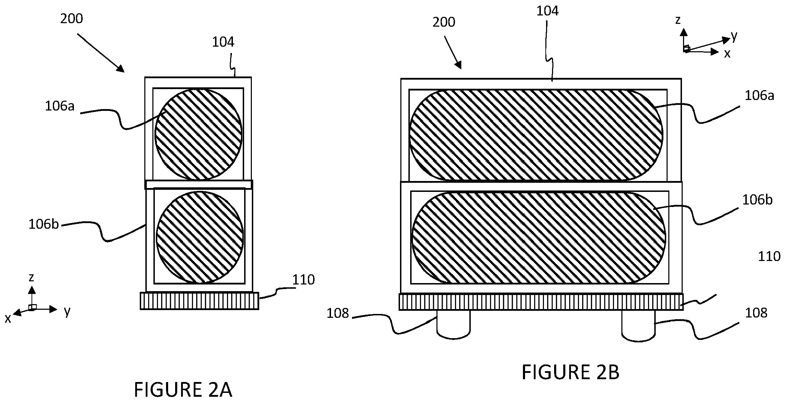

**FIG. 1** is an example side-view of a vehicle 100 configured with a gas fuel storage system, GSS, 200 (see also FIG. 2) for which an energy absorbing system according to the disclosed technology may be provided. The GSS 200 comprises a HSS 200 for vehicle hydrogen fuel storage in some embodiments. The GSS 200 comprises a GSS 200 for a vehicle liquefied natural gas, LNG, fuel storage in some embodiments.

In FIG. 1, the GSS 200 comprises a protective frame 104 enclosing a pair of gas fuel tanks 106a, 106b which is located to the rear of a cab 102 of the vehicle cab and in front of a vehicle accessory 112 of the vehicle 100. The GSS 200 may be mounted on the vehicle chassis 110 or fixed to the rear of the cab or front of the vehicle accessory. Its lateral dimensions . It will be apparent to anyone of ordinary skill in the art that the number of fuel tanks 106a, 106b may differ in other embodiments, and that the configuration of the protective frame 104 may also differ, providing the frame protectively encloses the vehicle gas fuel tank(s) and provides suitable fixing points for attaching at least one energy absorbing device, referred to herein as an energy absorber, to either side of the frame when viewed from the front or rear of the vehicle 102. As shown in FIG. 1, the GSS 200 is located between the vehicle accessory 112. Examples of a vehicle accessory include a trailer or container mounted on a chassis base, however, other examples may include body building equipment vehicle accessories such as cranes and the like. Also shown in FIG. 1 are vehicle wheels 108 and vehicle accessory wheels 108.

In some embodiments the vehicle a heavy-duty vehicle, which may be an autonomous heavy-duty vehicle, or a remote controlled heavy-duty vehicle, or be a semi-autonomous or manually controlled heavy-duty vehicle that needs to be localized in its area of operation. The heavy-duty vehicle may have one or more vehicle accessories attached such as, for example, a trailer and/or container. A heavy-duty vehicle may comprise a wide range of different physical components or devices, such as combustion engines, electric machines, friction brakes, regenerative brakes, shock absorbers, air bellows, and power steering pumps. These physical devices are commonly known as Motion Support Devices (MSD). The MSDs may be individually controllable, for instance such that friction brakes may be applied at one wheel, i.e., a negative torque, while another wheel on the vehicle, perhaps even on the same wheel axle, is simultaneously used to generate a positive torque by means of an electric machine. The autonomous operation of a heavy-duty vehicle is accordingly more complex than the autonomous operation of a more light-weight vehicle such as a car. If the heavy-duty vehicle is capable of some degree of autonomous driving operation, then it may also be provided with an advanced driving system, ADS, configured to make tactical decisions for a control system for the vehicle's propulsion system.

FIGs. 2A and 2B show an example of a GSS 200 for storing gas, for example, hydrogen, fuel for a vehicle in more detail. FIG. 2A shows a side view of the GSS 100 in which the cylindrical tanks 106a,106b appear as circles. FIG. 2B shows the front view, from the direction of the rear of the cab 102, in which the gas, for example, hydrogen, fuel tanks have a cylindrical lozenge shape. In both FIGS. 2A and 2B, the frame 104 sits on a suitable platform, for example, the vehicle chassis 110 as shown. Figure 2B also shows the location of the vehicle weeks relative to the lateral extent of the protective frame 104.

Other configurations and shapes of the HSS 100 may be provided to protect the gas fuel tanks which have a different shape and configuration to those shown schematically in the drawings as will be appreciated by anyone skilled in the art. For example, a cylinder configuration or a spherical configuration may be enclosed by a suitably dimensioned protective frame on to which an energy absorbing system for a vehicle fuel gas, for example, hydrogen, storage system according to the disclosed technology may be also attached used.

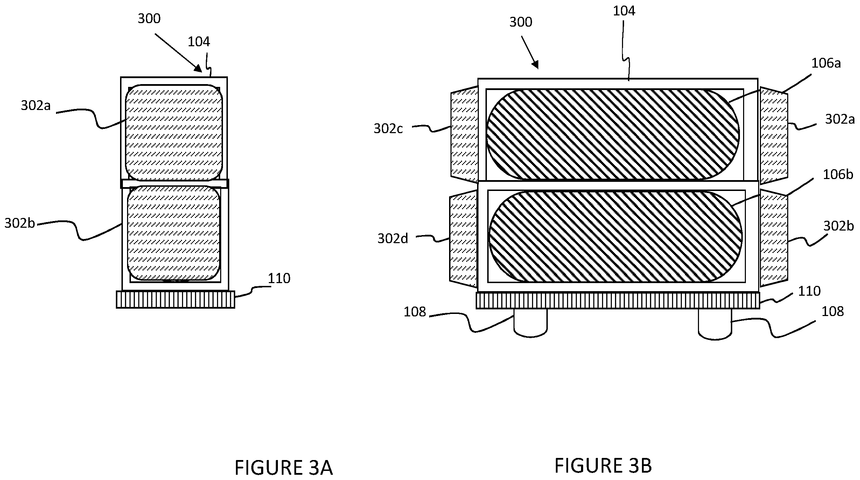

FIGs. 3A and 3B show schematically side and frontal views of an energy absorbing system 300 according to some embodiments of the disclosed technology which are attached to the GSS 200 shown in FIGs. 2A and 2B. which show schematically an energy absorbing system for the gas, for example, hydrogen, storage system of FIGs. 1, 2A and 2B according to an example embodiment of the disclosed technology.

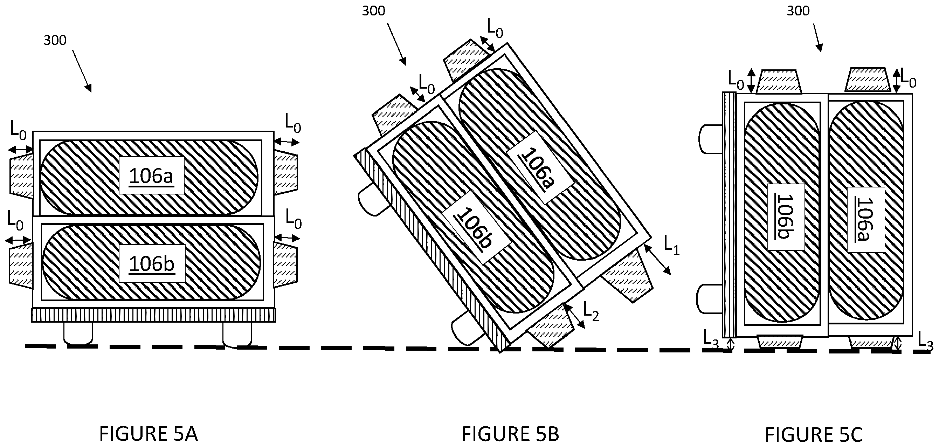

In Figs 3A and 3B, an embodiment of an energy absorbing system 300 is shown in which a vertical pair of energy absorbing elements or devices 302 are mounted to the protective frame 104 which encases the vehicle fuel tanks 106a,106b of the vehicle fuel GSS 200 shown in Figure 2. In the example shown in FIGS. 3A, the energy absorbing elements 302a, 302b completely conceal lateral sides of the fuel tank 106a, 106b. The energy absorbing elements are attached using any suitable fixing means, for example, bolts or rivets or welds, to the frame 104 on either side of the frame. The energy absorbing elements 302a - 302d may be formed from air-bags which incorporate a motion sensor such as an inertial measurement unit or inertial force sensor, a gyroscope or other suitable tilt monitor mechanism. These may be configured to taken readings and send these to a deployment mechanism. In other words, if the readings indicate the motion sensed has characteristics above certain deployment triggering levels, for example, if the truck tilts laterally more than 10 degrees, or if a force higher than a certain lateral impact force level, is experienced, the airbags on one side (or one both sides) may be configured to inflate (see Figures 5A, 5B and 5C described later below). Alternatively, inert energy absorbers such as crush cans may be used instead or in addition which are mounted on the protective frame 104. In this way, if a vehicle impacts a side rail, the fuel GSS can be prevented from absorbing too much energy if the energy absorption system deploys between the frame and the side rail. Similarly, if the vehicle falls over, the energy absorption system can deploy as the vehicle falls to prevent the frame 104 from absorbing too much energy as it moves downwards towards the ground.

In some embodiments, the energy absorbing system 300 comprises: a vehicle fuel gas, for example, hydrogen, storage system, for example, a GSS 200 comprising at least one gas, for example, hydrogen, fuel tank 106a,b configured to provide fuel for a vehicle 100 and a fuel tank protection frame 104 enclosing the at least one gas fuel tank 106a,106b. In some embodiments the frame 104 is configured to attach directly to the vehicle chassis 110 but it may attach indirectly to the vehicle by being mounted first on a suitable support platform configured to support the weight of the gas fuel tanks when full along with the frame. The system 300 also comprises one or more energy absorbers 302, for example, airbags and/or crush cans, located on either side of the fuel tank protection frame 104. Each energy absorber 302 is configured to absorb energy responsive either to lateral impact force(s) on the vehicle 102 and/or the fuel tank protection frame 104 on the side where that energy absorber is located.

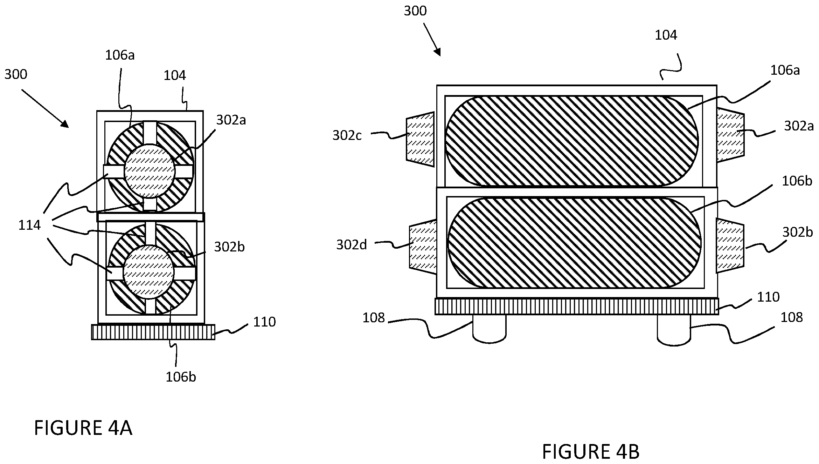

FIGs 4A and 4B show schematically side and frontal views another example of an energy absorbing system 300 in which a pair of energy absorbers are provided on the protective frame 104 which encloses the gas fuel tanks 106a, 106b of the GSS 200 of the vehicle. As shown in Figure 4A, the frame 104 has a different configuration and the energy absorbing elements 102a, 102b are mounted on crossbars 114 which extend vertically and horizontal across each end of frame 104. The energy absorbing elements 102a-102d may be configured to be much smaller in diameter than the frame and they may be encased with the frame. This may result in the energy absorbing elements causing less drag on the vehicle when it is moving and so help the vehicle be driven in a more fuel efficient matter.

In some embodiments, the fuel tank protection frame 104 is located to the rear of a driver's cab of the vehicle and the frame 104 extends laterally across from one side of the vehicle 102 to the other side of the vehicle 102.

In some embodiments, each energy absorber 302 of the one or more energy absorbers 302a,b,c,d located on a side of the fuel tank protection frame 104 is configured to deploy responsive to lateral impact force(s) generated by a collision of the vehicle 100 or fuel tank protection frame 104 with another object on the side where that energy absorber 302 is located. The deployed energy absorber is better configured to absorb energy from the lateral impact force(s).

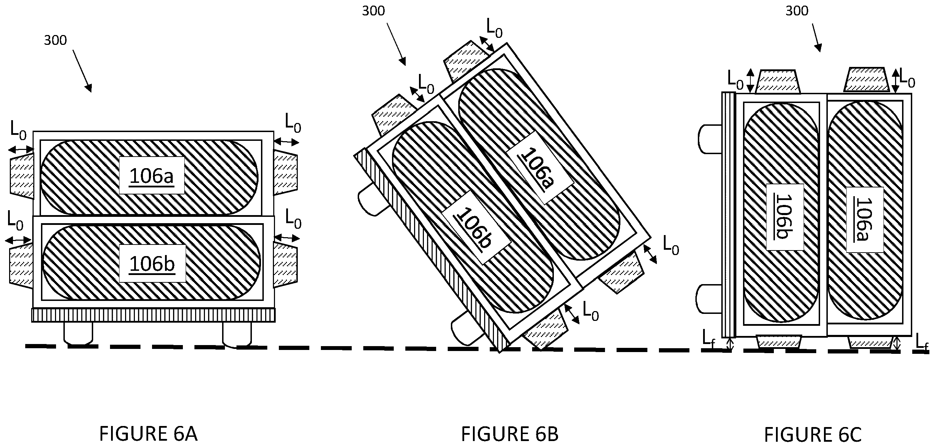

An example of how the energy absorbers of FIGs. 4A and 4B may be deployed when a vehicle rolls over sideways is shown schematically in FIGs. 5A to 5C in an example embodiment where the energy absorbing elements 302 comprise expanding elements which expand when a sufficient impact force is experienced such as airbags and in FIGS. 6A to 6C in an example embodiment where the energy absorbing elements comprise fixed dimension deformable elements, such as crush cans.

In FIGs. 5A and 6A, vehicle 100 has an energy absorbing system 300 for its GSS 200. The energy absorbing system 300 comprises two pairs of energy absorbing elements 302, one pair on each lateral side of the frame 104 relative to the vehicle. On each side of the frame 104, a pair of energy absorbing elements is mounted at each end of the frame where it protects the lateral ends of fuel tanks 106a, 106b.

In FIG. 5A the energy absorbing elements are deployed to expand their size to absorb energy. This allows the energy absorbing elements to be initially relatively compact and extend only a small amount L₀ outwards from the protective frame 104 (see FIG. 5A). An example of such a type of deployable and expanding energy absorber is an airbag. In FIG. 6A, however, a different type of energy absorbing element is shown having a fixed size which deforms to absorb energy from an impact. An example of such an energy absorber is a crush can which is configured to deform more easily than the protective frame when subject to an impact force.

FIG. 5B shows how, responsive to the frame 104 or vehicle 100 experiencing an impact, the vehicle 100 beings to tilt sideways. Responsive to detecting the vehicle's sideways tilt has exceeded a threshold value of tile, the energy absorbing elements, for example, airbags, on the side nearest to the ground as the vehicle tiles deploy which extends their volume and lateral reach outwards from the vehicle. As shown in FIG. 5B, the airbag furthest from the ground is unimpeded and has length L₁ however, the airbag closest to the ground has already started to absorb energy as the vehicle falls towards the ground, and is now compressed slightly and so only extends laterally by a shorter distance L₂ where L₂ is less than L₁. In this example, the lateral impact force(s) on the vehicle (or the vehicle frame 104) are sufficiently high to result in the vehicle 100 to continue to roll sideways until the vehicle is completely on its side as shown in FIG. 5C.

In Figure 6B in contrast, the crush cans have maintained their initial size and continue accordingly to laterally extend by an amount L₀ from the protective frame 104.

Returning now to FIG 5C, the vehicle 100 has rolled over onto its side and the energy absorbing elements 302a, 302b (for example, airbags) have deployed and are now slightly compressed due to absorbing the ground impact on the protective frame 104, and are shown extending only by a distance L₃, where L₃ < L₂ from the side of the frame 104.

In contrast, FIG 6C shows how the crush cans are now both compressed to a compressed amount L_{f} as the vehicle 100 has completely rolled over, but the frame 104 has maintained its integrity as the crush cans have absorbed the energy. In other words, the crush cans will maintain their lateral extension from the frame L₀ until they are crushed to a smaller lateral extension L_{f} where L_{f} < L₀.

In some embodiments, each one of the energy absorbers 302 of the one or more energy absorbers located on a side of the fuel tank protection frame 104 comprises an air-bag and in some embodiments a pair of air-bags are deployable on each side of the fuel tank protection frame 104. The gas inside the so-called air-bags may be a different fluid or gas in some embodiments than air selected to have a suitable energy absorption property. The volume or size of the air-bag and the amount of compressed fluid of gas it contains and the size it expands to when deployed may be selected according to the vehicle characteristics such as its weight, the weight and resilience of the protective frame 104, and the weight of the fuel tank(s) 106. Any suitable energy absorbing element 302 may be used providing it can be suitably configured for use in an energy absorbing system 300, 400 for a vehicle fuel HSS 200 as disclosed herein. Suitability for use may be determined by the size of the energy absorbing element, the amount of energy it can absorb given the vehicle weight, the weight of any cargo being carried, and/or the weight of the HSS when the tanks are full of fuel. For example, in some embodiments, the energy absorber comprises an air-bag. In some embodiments, the energy absorber is a crush can or similar inert device configured to be easily deformed and which does not need to be deployed first in order to absorb energy. In some embodiments, both types of energy absorber are mounted on the protective frame 104 of the GSS on each lateral side (relative to the vehicle). In some embodiments, energy absorbers may also be mounted on the frame in other locations, such as to the front and rear of the protective frame and/or to the top or bottom if there is sufficient space for them to be attached to the frame. In the case where they may be attached to the frame at the base, the energy absorbers may be configured to be inert deformable elements such as crush cans so as to not additionally destabilize the GSS in the event of a collision or vehicle roll-over.

Any suitable vehicle which may be fitted with a GSS, for example, an HSS, which extends laterally fully across the vehicle width may use an example of an energy absorbing system as disclosed herein. The amount of energy which may need to be absorbed however may depend on the type of vehicle, for example, the vehicle may be a heavy vehicle.

In some embodiments, the vehicle is a heavy-duty vehicle 100 and the fuel tank protection frame 104 is located between the cab 102 and a vehicle accessory 112 attached to the heavy vehicle 100. The vehicle accessory may comprise a trailer, a container mounted on a trailer chassis or another type of body building equipment mounted on a trailer chassis.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy absorbing system for a vehicle fuel gas storage system, the energy absorbing system comprising:
a gas fuel storage tank configured to provide fuel for a vehicle;
a fuel tank protection frame enclosing the gas fuel storage tank, the frame configured to attach directly or indirectly to the vehicle;
one or more energy absorbers located on either side of the fuel tank protection frame, each energy absorber being configured to absorb energy responsive to lateral impact force(s) applied to the vehicle and/or to the fuel tank protection frame.

2. The energy absorbing system of claim 1, wherein the fuel tank protection frame is located to the rear of a driver's cab of the vehicle, wherein the frame extends laterally across from one side of the vehicle to the other side of the vehicle.

3. The energy absorbing system of claims 1 or 2, wherein the lateral impact force(s) include forces generated as a result of the vehicle rolling over or otherwise rotating onto a side of the fuel tank protection frame.

4. The energy absorbing system of any one of claims 1 to 3, wherein each energy absorber of the one or more energy absorbers located on a side of the fuel tank protection frame is positioned on that side of the frame and wherein, responsive to either or both a force being generated by a lateral collision of the vehicle or the fuel tank protection frame with another object and a force generated as a result from the vehicle rolling towards or onto its side, that energy absorber absorbs energy from the force(s) generated.

5. The energy absorbing system of any one of the previous claims, wherein each one of the energy absorbers of the one or more energy absorbers located on a side of the fuel tank protection frame comprises an air-bag.

6. The energy absorbing system of claim 5, wherein a pair of air-bags are deployable on each side of the fuel tank protection frame.

7. The energy absorbing system of any one of the previous claims 1 to 4, wherein each one of the energy absorbers of the one or more energy absorbers located on a side of the fuel tank protection frame comprises a crush can.

8. The energy absorbing system of any one of the previous claims, wherein the energy absorbers located on each side of the fuel tank protection frame comprise an air-bag and a crush can.

9. The energy absorbing system of any one of the previous claims, wherein the gas is hydrogen gas.

10. The energy absorbing system of any one of the previous claims, wherein the gas is natural gas which is stored in the vehicle gas fuel storage tank as liquefied natural gas, LNG.

11. An energy absorber device configured for use in an energy absorbing system for vehicle fuel liquefied gas storage system or hydrogen gas storage system according to any one of claims 1 to 10, wherein the energy absorber comprises an air-bag or a crush can.

12. A vehicle comprising the energy absorbing system of any of claims 1-10.

13. The vehicle of claim 12, wherein the vehicle is a heavy vehicle.

14. The vehicle of claim 13, wherein the gas fuel tank protection frame is located between the cab and a vehicle accessory attached to the heavy vehicle.

15. The vehicle of claim 11, wherein the vehicle accessory is a trailer.
